# EUROPÄISCHE PATENTSCHRIFT

(11) **EP 0 685 522 B1**
(45) Veröffentlichungstag und Bekanntmachung des Hinweises auf die Patenterteilung: **06.08.1997**
(21) Anmeldenummer: 95107709.8
(22) Anmeldetag: 20.05.1995
(51) Int. Cl.: C08L 23/02, C08L 23/10, C08L 23/16

(54) **Polyolefine, Polyolefin-Blends und elastomermodifizierte Polyolefine mit erhöhter Oberflächenpolarität**
Polyolefines, polyolefine blends and elastomer modified polyolefines of raised surface polarity
Polyoléfines, mélanges polyoléfiniques et polyoléfines modifié avec élastomères de polarité superficielle élevée

(30) Priorität: 03.06.1994 DE 4419431
(43) Veröffentlichungstag der Anmeldung: 06.12.1995
(73) Patentinhaber: Th. Goldschmidt AG, 45127 Essen (DE)
(72) Erfinder: Fock, Jürgen, Dr., D-40470 Düsseldorf (DE); Hahn, Günter, Dr., D-45475 Müllheim (DE); Knebelkamp, Arno, Dr., D-45131 Essen (DE)

(56) Entgegenhaltungen:
- EP-A- 0 248 543
- EP-A- 0 298 667
- EP-A- 0 537 368

## Beschreibung

Die Erfindung betrifft Polyolefine, Polyolefin-Blends und elastomermodifizierte Polyolefine mit erhöhter Oberflächenpolarität, Zwischenprodukte und Verfahren zu ihrer Herstellung sowie die Herstellung von Formkörpern und Halbzeugen mit erhöhter Oberflächenpolarität.

Der Kunststoffanteil im Automobil ist in den letzten Jahren stark gestiegen. Unter dem Aspekt der Rückführbarkeit von Kunststoffen in den Materialkreislauf ist man jedoch bemüht, die Vielzahl der Kunststoffe auf wenige unverzichtbare Typen einzuschränken. Vor diesem Hintergrund ist verständlich, daß Polyolefine, insbesondere Polypropylen, Polypropylencopolymere und -Blends mit ihrem breiten Eigenschaftsspektrum und ihrer guten Recycling-Fähigkeit bevorzugt im Automobilbereich eingesetzt werden.

Leider haben alle polyolefinbasierenden Kunststoffe, wie sie in der Encyclopedia of Polymer Science, Sec. Edition 1985 Vol. 6 Ethylene Polymers (S. 383-522), Ethylene-Propylene Elastomers (S. 522-564) und Vol. 13 Propylene Polymers (S. 464-531) beschrieben sind, neben ihren unbestritten guten Eigenschaften auch ein gravierendes Defizit, nämlich ihre niedrige freie Oberflächenenergie. Die hohe Hydrophobie und Kristallinität von Polyolefinen erschwert die Benetzung und Haftung von weniger hydrophoben bzw. hydrophilen Materialien. Dieser Sachverhalt wird dann sichtbar, wenn die Oberfläche dieser Kunststoffe lackiert, bedruckt, verklebt oder angeschäumt werden soll.

Es hat daher nicht an Bemühungen gefehlt, durch spezielle Nachbehandlungen die Oberfläche von Polyolefinartikeln polar einzustellen. Die Publikation "Surface Treatments of Polyolefins" (Progress in Organic Coatings, 21 (1993) 269-284, J.M. Lane and D.J. Hourston) vermittelt einen Überblick über die gebräuchlichsten Behandlungsmethoden zur Erhöhung der Oberflächenenergie von Polyolefinen, nämlich
- Corona-Entladung
- Plasmabehandlung
- Beflammung
- Chemisches Ätzen
- Fluorierung
- Ozonisierung und photooxidative Behandlung

Gängigste Methode zur Vorbehandlung ist das Beflammen. Probleme bereitet dabei die Prozeßüberwachung, die grundsätzlich keine 100 %ige Sicherheit bietet, da bereits kleine Fehler starke Haftungsstörungen verursachen können. Ein gewisses Brandrisiko und die erforderliche Reinraumatmosphäre bedeuten zusätzlichen Aufwand. Problematisch ist auch die Verarbeitung von Mahlgut aus Recyclingmaterial (Ausschußteile oder gebrauchte lackierte Teile). Restliche Lackpartikel stellen sich auf oder verbrennen beim Beflammen und verursachen eine deutliche Stippen- und Kraterbildung, deren Vermeidung zusätzlichen verfahrenstechnischen Aufwand bedingt.

Die Corona-Vorbehandlung ist insbesondere verbreitet für die Vorbehandlung von Polyolefin-Folien zur Haftvermittlung für Kleber oder Druckfarben. Da der Adhäsionseffekt anscheinend auf instabilen Verbindungen beruht und nach kurzer Zeit abklingt, ist eine baldige Beschichtung nach dem Corona-Prozeß erforderlich.

Bei der Plasma-Vorbehandlung können örtliche Lackhaftungsstörungen auftreten, die auf unzureichenden Kontakt der Oberflächen mit Plasma zurückzuführen sind. Wegen der hohen Verfahrenskosten hat diese Vorbehandlung nur begrenzte Anwendung gefunden.

Das chemische Ätzen, beispielsweise im Chromschwefelsäure-Tauchprozeß, bewirkt zwar eine sehr starke Haftverbesserung, bereitet aber Aufbereitungsprobleme.

Allen Methoden ist gemein, daß sie als zusätzlicher Verfahrensschritt am fertigen Polyolefinartikel ausgeführt werden müssen.

Speziell im Automobilbereich werden in den letzten Jahren verstärkt elastomermodifizierte Polypropylene (EMPP), die sowohl als Reaktor-Blends (s. Kunststoffe 82 (1992) 6, S. 499-501, Polypropylen-Reaktor-Blends, H. Schwager) als auch als Extruder-Blends am Markt sind, als Funktionsteile wie Stoßfänger, Spoiler, Blenden, Spiegelgehäuse u. ä. eingesetzt. Damit rückte speziell auch der Wunsch nach problemloser Lackierbarkeit solcher Formteile ins Blickfeld. Einen Überblick über die heute gängigen Methoden der Vorbehandlung von Polypropylen-Blends vor dem Lackieren gibt der Artikel: "Problemlösungen beim Lackieren von Polypropylen-Blends" Ch. Gruner, B. Rapp, H. J. Zimmermann, Kunststoffe 82 (1992) 9, S. 802-806. Auch die hier beschriebenen Problemlösungen beinhalten immer eine physikalisch-chemische Behandlung der Oberfläche des fertigen Formteiles und damit einen zusätzlichen Verfahrensschritt vor der eigentlichen Lackierung.

Es wurde nun gefunden, daß man die beschriebenen Probleme vermeidet, wenn spezielle Additive bei der Zubereitung des Polyolefins entweder bei der Compoundierung oder direkt beim Spritzgießen über die Schmelze vor der Formgebung eingearbeitet werden.

Gegenstand der Anmeldung sind somit Polyolefine, Polyolefin-Blends und elastomermodifizierte Polyolefine, welche dadurch gekennzeichnet sind, daß sie als Additive zur Erhöhung der Oberflächenpolarität AB-Blockcopolymere der allgemeinen Formel 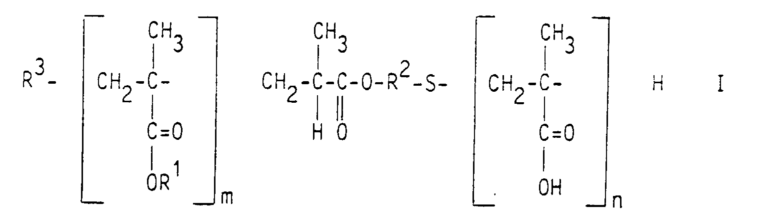 wobei die Reste
- R¹: gleich oder verschieden sind und Alkylreste mit 1 bis 8 Kohlenstoffatomen, ausgenommen den tert. Butylrest, bedeuten,
- R²: -[CH₂)ₚ-Reste sind, in denen p eine Zahl von 2 bis 6 bedeutet,
- R³: den Rest eines an sich bekannten Kettenreglers, welcher frei von aktiven Wasserstoffatomen ist, bedeutet und
- n und m: gleich oder verschieden sind und jeweils einen mittleren Zahlenwert von ≥ 3 aufweisen,
enthalten.

Bevorzugt ist
- R¹: ein Alkylrest, ausgenommen der tert. Butylrest, mit 1 bis 8 Kohlenstoffatomen,
- R²: der -(CH₂)₂- -Rest,
- R³: der C₁₂H₂₅S-Rest und
- n und m: weisen bevorzugt jeweils einen Zahlenwert von 4 bis 100 auf.
Besonders bevorzugt für R¹ ist der Methyl-, Ethyl-, Butyl- oder 2-Ethylhexylrest. Vorzugsweise sind die Blockcopolymeren in Mengen von 0,1 bis 10 Gew.-% enthalten, insbesondere 1 bis 3 Gew.-%.

Gegenstand der Anmeldung sind weiterhin Polyolefine, Polyclefin-Blends und elastomermodifizierte Polyolefine, enthaltend Blockcopolymere der allgemeinen durchschnittlichen Formel 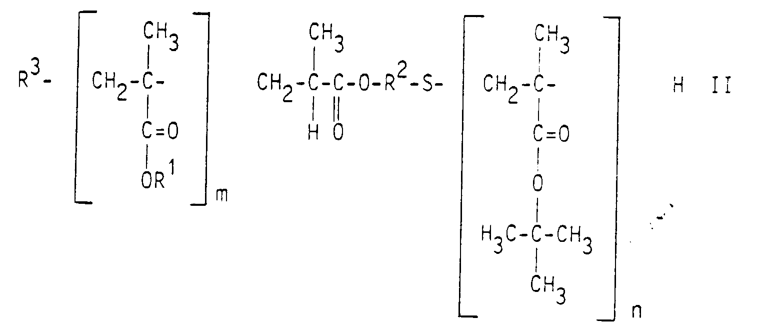 wobei die Reste und Indices die bereits angegebene Bedeutung haben.

R³ ist der Rest eines an sich bekannten Kettenreglers, wobei der Rest R³ frei von aktiven Wasserstoffatomen ist. Beispiele für Ketsind Mercaptane, Chloroform und Isopropylbenzol. Bevorzugtes Beispiel eines solchen, vom Kettenregler herrührenden Restes R³ ist der Rest C₁₂H₂₅S-. Weitere Beispiele für Reste, die vom Kettenregler herrühren, sind der von tert.-Dodecylmercaptan abgeleitete Rest und der Octadecyl- und Tetradecylmercaptanrest.

Ein Beispiel dieser Produkte ist:

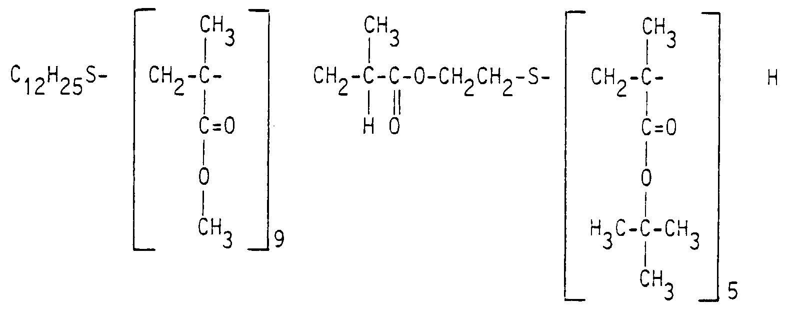

Diese Blockcopolymere werden hergestellt, indem man Polymerisate der allgemeinen Formel 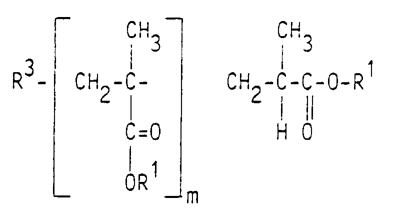 in der die Reste und Indices die bereits genannte Bedeutung haben, mit Polymerisaten der allgemeinen Formel 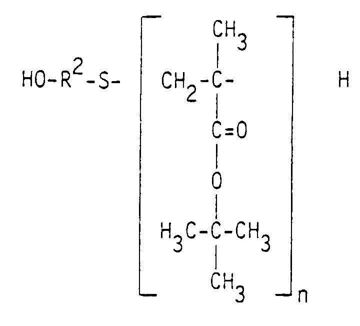 im Molverhältnis 1,1 : 1 bis 1 : 1,1 unter Zusatz von an sich bekannten Katalysatoren umestert.

Gegenstand der Anmeldung ist weiterhin ein Verfahren zur Herstellung von Polyolefinen, Polyolefin-Blends und elastomermodifizierten Polyolefinen mit erhöhter Oberflächenpolarität, welches dadurch gekennzeichnet ist, daß man die Polyolefine, Polyolefin-Blends und elastomermodifizierten Polyolefine, welche die Blockcopolymere der vorstehend genannten allgemeinen durchschnittlichen Formel II enthalten, auf Temperaturen oberhalb von etwa 160°C erhitzt.

Dabei spaltet sich Isobuten ab, und es entstehen Produkte folgender Struktur:

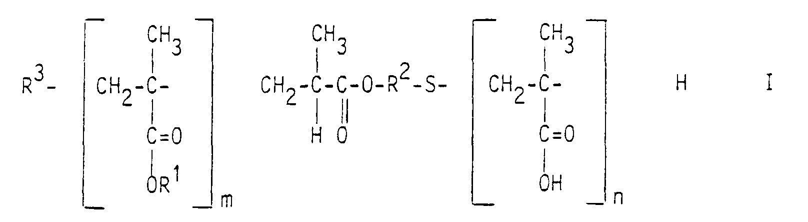

Die Reste und Indices haben dabei die bereits angegebene Bedeutung.

Zur Erzielung der gewünschten Wirkung der Erhöhung der Oberflächenpolarität ist es dabei nicht erforderlich, daß die Isobuten-Abspaltung zu 100 % erfolgt.

Als Beispiele werden genannt:

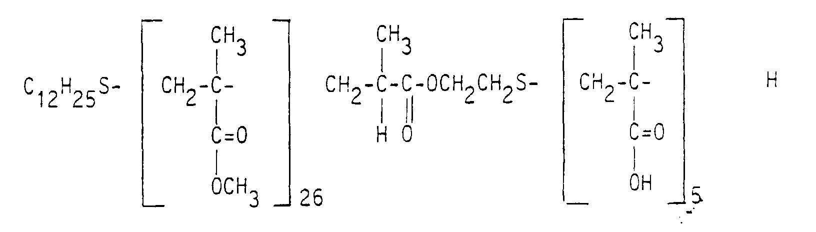

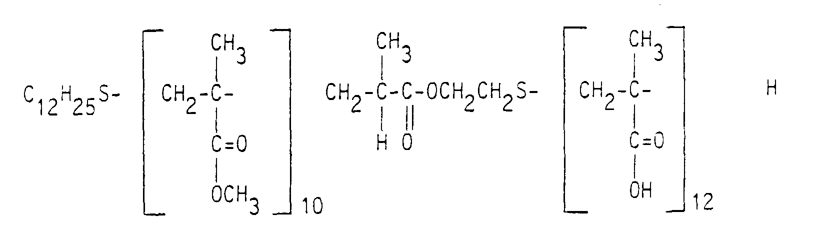

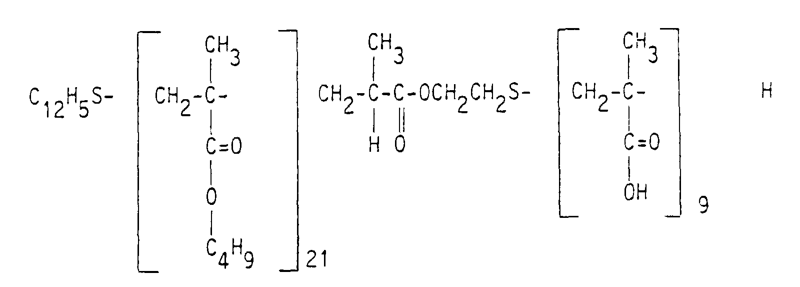

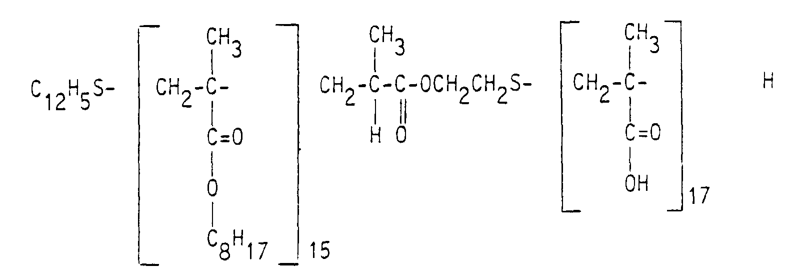

Denkbar ist allerdings auch, daß nach der Isobutenabspaltung benachbarte Carboxylgruppen unter Wasserabspaltung weiter zu Anhydridgruppen reagieren.

Gegenstand der Anmeldung ist weiterhin ein Verfahren zur Herstellung von Polyolefin-Artikeln mit erhöhter Oberflächenpolarität durch Verarbeitung von Polyolefinen, Polyolefin-Blends und elastomermodifizierten Polyolefinen, welche die Blockcopolymeren der vorstehend genannten allgemeinen Formel II enthalten, zu Formteilen, Hohlkörpern, Folien und Halbzeugen, wobei, wie vorstehend erläutert, durch Isobuten-Abspaltung das entsprechende Carbonsäure-Derivat der allgemeinen Formel I in situ entsteht.

Bevorzugt werden die Blockcopolymeren der allgemeinen Formel II in die Schmelze der Polyolefine, Polyolefin-Blends und elastomermodifzierten Polyolefine vor der Formgebung eingearbeitet und die Schmelze in üblicher Weise durch z. B. Spritzgießen, Blasformen oder Extrusion geformt.

Eine andere Möglichkeit besteht darin, die Additive in der Form einzusetzen, wie sie nach Abspaltung von Isobuten erhalten werden (s. Formel I). In Abhängigkeit vom Polyolefintyp und seiner Morphologie kann in manchen Fällen der Einsatz der freien Form des Additivs günstiger als der der geschützten Form sein.

Da praktisch jedes handelsübliche Polymer aus dem Basispolymer und einer Reihe von Additiven, wie Antioxidantien, UV- und Wärmestabilisatoren, Gleitmitteln und Verarbeitungshilfsmitteln, besteht, kann das erfindungsgemäß zugesetzte Blockcopolymere zusammen mit diesen Additiven zugefügt werden.

Hierzu ist keine zusätzliche technische Ausrüstung erforderlich, da die Polymere in üblicher Weise auf Extrudern, Knetern oder Walzen verarbeitet werden können.

Ein zusätzlicher Verarbeitungsschritt ist daher nicht erforderlich.

Der Einsatz und die Ausprüfung der Additive wurden mit folgenden Schritten vorgenommen:

### 1. Compoundierung

Auf einem Laborwalzwerk wird bei 180°C Walzentemperatur ein 10 %iges Masterbatch des Blockcopolymer-Additivs in elastomermodifiziertem Polyproplyen (EMPP) derart hergestellt, daß der Kunststoffschmelze portionsweise innerhalb von 10 Minuten das Additiv zugesetzt wird. Es ergibt sich ein homogenes Walzfell, welches nach Rückkühlung auf 130°C von der Walze abgenommen werden kann und nach dem vollständigen Abkühlen in einer Schneidmühle zerkleinert wird.

### 2. Spritzguß

Entsprechend der besonders bevorzugten Additivkonzentration von 1 bis 3 Gew.-% wird das EMPP-Masterbatch 1 : 10 bis 1 : 3 mit der nicht additivierten EMPP-Type abgemischt und auf einer Spritzgießmaschine bei 250°C zu Platten der Größe 8 cm x 6 cm verarbeitet. Nach dem Spritzgießen werden die Platten mindestens zwei Tage gelagert, bevor sie weiter behandelt werden.

### 3. Vorbehandlung und Lackierung

### 3. 1 Vorbehandlung

In einigen Fällen werden die Prüfkörper einer praxisnahen Vorbehandlung unterzogen (Power-Wash):
a. Vorwäsche durch Absprühen mit 70°C heißer Waschlösung bei 1 bar Druck
b. Spülung mit Stadtwasser
c. Spülung mit vollentsalztem Wasser
d. Abblasen anhaftenden Wassers
e. Trocknung 35 Minuten bei 80°C

### 3.2 Lackierung

Es werden zwei Lackschichten im Spritzverfahren aufgetragen:
a. Grundierung: 2-Komponenten-Polyurethanlack
   z. B. Fa. Herberts: Primer 47645/Härter 47643,
   Mischungsverhältnis 100 : 40,
   Verdünner: 11098
   Trocknung: 25 Minuten bei 85°C
   Die Trockenschichtdicke der Grundierung liegt bei 15 bis 20 µm.
b. Decklack: 2-Komponenten-Polyurethanlack
   z. B. Fa. Herberts: Tornadorot/Härter 10044,
   Mischungsverhältnis 100 : 33,
   Verdünner: 11171
   Ablüften: 10 Minuten bei Raumtemperatur
   Trocknung: 40 Minuten bei 85°C
   Die Trockenschichtdicke des Decklackes liegt bei 30 µm.

Nach dem Lackieren werden die Platten einen Tag bei Raumtemperatur, zwei Tage bei 50°C und erneut einen Tag bei Raumtemperatur gelagert, bevor die Lackhaftungsprüfung erfolgt.

### 4. Lackprüfungen

a. Gitterschnitt nach DIN 53151
   Bewertung: Gt 0 (sehr gut) - Gt 4 (≥ 65 % Lackablösung)
b. Dampfstrahltest (Anlehnung an Mercedes-Benz-Dampfstrahlprüfung) In die lackierten Platten wird mit einem Messer im Winkel von 70° ein Andreaskreuz geritzt.
   Es wird ein Dampfstrahlgerät der Fa. Kärcher (HDS 590 C) mit der Düse 25045 verwendet.
   Dampfstrahlbedingungen:
      Druck: 80 bar
      Temperatur: 58°C
      Abstand zum Prüfling: 12 cm
   Spritzstrahlpositionierung: Entlang einer Schnittlinie im Winkel von 90° zur Probenoberfläche
      Prüfdauer: 20 Sekunden
   Bewertung: 0 (sehr gut) - 5 (mangelhaft)

### Beispiele

### AB-Blockcopolymer-Additive

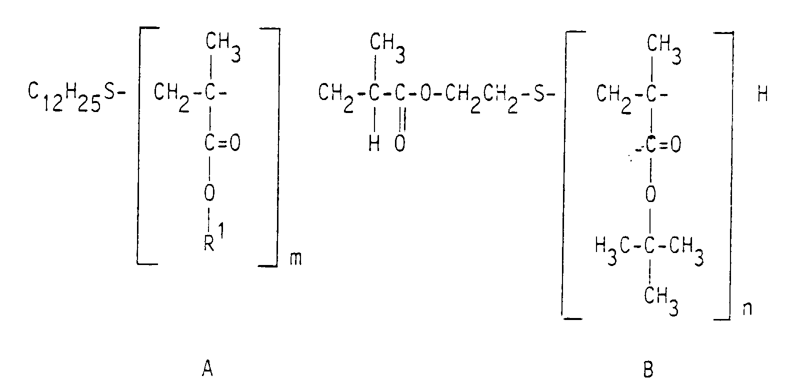

| | Segment Mₙ | | | | |
|---|---|---|---|---|---|
| | Block A | | | Block B | |
| Additiv | R¹ | Mₙ | m | PTBMA* Mₙ | n |
| 1 | Me | 1100 | 11 | 1300 | 9 |
| 2 | Me | 2600 | 26 | 1300 | 9 |
| 3 | Me | 2600 | 26 | 600 | 4 |
| 4 | Bu | 1000 | 7 | 1000 | 7 |
| 5 | Bu | 3000 | 21 | 600 | 4 |

| | | | | | |
|---|---|---|---|---|---|
| *PTBMA = Polytertiärbutylmethacrylat Me = Methyl Bu = Butyl | | | | | |

### Rezepturen und Ergebnisse der Lackprüfung

| Compound-Bestandteile | Compound-Bezeichnung | | | | | | | |
|---|---|---|---|---|---|---|---|---|
| | A | B | C | D | E | F | G | H |
| Hifax Exp. 5124* | 100 | 100 | 100 | 100 | 100 | - | - | - |
| (Himont) | | | | | | | | |
| Novolen 2800 JX* | - | - | - | - | - | 100 | 100 | 100 |
| (BASF) | | | | | | | | |
| Additiv 1 | - | 1,5 | 3,0 | - | - | - | - | - |
| Additiv 2 | - | - | - | 2,0 | - | - | - | - |
| Additiv 3 | - | - | - | - | - | - | 1,5 | - |
| Additiv 4 | - | - | - | - | 3,0 | - | - | - |
| Additiv 5 | - | - | - | - | - | - | - | 3,0 |
| Vorwäsche | - | - | - | + | + | + | - | + |
| Lackprüfung | | | | | | | | |
| Gitterschnitt | Gt3 | Gt1 | Gt0 | Gt0 | Gt1 | Gt4 | Gt1 | Gt1 |
| (DIN 53 151) | | | | | | | | |
| Dampfstrahltest | 5 | 0-1 | 0 | 0 | 0-1 | 4 | 0-1 | 1 |

| | | | | | | | | |
|---|---|---|---|---|---|---|---|---|
| * PP/EPDM | | | | | | | | |

Wie aus vorstehender Tabelle ersichtlich läßt sich durch Einsatz der erfindungsgemäßen AB-Blockcopolymere die Haftfestigkeit von Lacken auf den in diesen Beispielen genannten elastomermodifzierten Polypropylenen deutlich im Vergleich zum Standard (Compound A bzw. F) verbessern, sowohl im Gitterschnitt als auch im Dampfstrahltest. Die gute Haftung könnte durch eine Wechselwirkung der Carboxylgruppen mit basischen Zentren im Lack erklärbar sein.

Die erfindungsgemäß erhaltenen Polyolefin-Artikel zeichnen sich weiterhin durch eine sehr gute Bedruckbarkeit und Beständigkeit der Aufdrucke aus.

## Patentansprüche

1. Polyolefine, Polyolefin-Blends und elastomermodifizierte Polyolefine, dadurch gekennzeichnet, daß sie als Additive zur Erhöhung der Oberflächenpolarität AB-Blockcopolymere der allgemeinen Formel 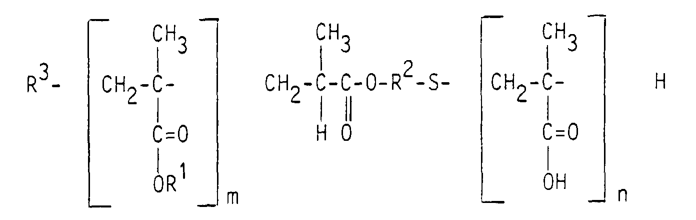 wobei die Reste
R¹ gleich oder verschieden sind und Alkylreste mit 1 bis 8 Kohlenstoffatomen, ausgenommen den tert. Butylrest, bedeuten,
R² -(CH₂)ₚ-Reste sind, in denen p eine Zahl von 2 bis 6 bedeutet,
R³ den Rest eines an sich bekannten Kettenreglers, welcher frei von aktiven Wasserstoffatomen ist, bedeutet und
n und m gleich oder verschieden sind und jeweils einen mittleren Zahlenwert von ≥ 3 aufweisen,
enthalten.

2. Polyolefine, Polyolefin-Blends und elastomermodifizierte Polyolefine gemäß Anspruch 1, dadurch gekennzeichnet, daß
R¹ ein Alkylrest mit 1 bis 8 Kohlenstoffatomen,
R² der -(CH₂)₂- -Rest,
R³ der C₁₂H₂₅S-Rest ist und
n und m jeweils einen Zahlenwert von 4 bis 100 aufweisen.

3. Polyolefine, Polyolefin-Blends und elastomermodifizierte Polyolefine gemäß Anspruch 2, dadurch gekennzeichnet, daß R¹ der Methyl-, Ethyl-, Butyl- oder 2-Ethylhexylrest ist und m und n mittlere Zahlenwerte von 3 bis 100 aufweisen.

4. Polyolefine, Polyolefin-Blends und elastomermodifizierte Polyolefine gemäß den Ansprüchen 1 bis 3, dadurch gekennzeichnet, daß die Blockcopolymeren in Mengen von 0,1 bis 10 Gew.-% enthalten sind.

5. Polyolefine, Polyolefin-Blends und elastomermodifizierte Polyolefine, enthaltend Blockcopolymere der allgemeinen durchschnittlichen Formel 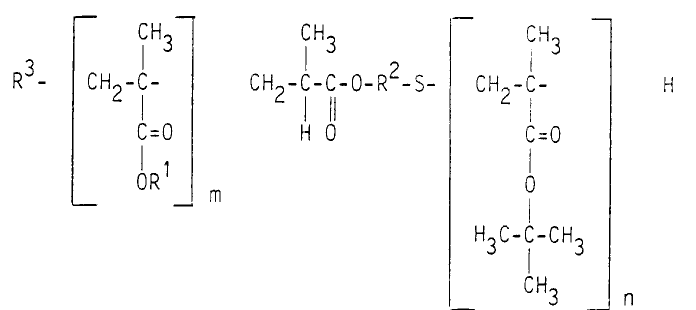 wobei die Reste und Indices die bereits in Anspruch 1 angegebene Bedeutung haben.

6. Verfahren zur Herstellung von Polyolefinen, Polyolefin-Blends und elastomermodifizierten Polyolefinen gemäß den Ansprüchen 1 bis 4, dadurch gekennzeichnet, daß man die Polyolefine, Polyolefin-Blends und elastomermodifizierten Polyolefine nach Anspruch 5 auf Temperaturen oberhalb von etwa 160°C erhitzt.

7. Verfahren zur Herstellung von Polyolefin-Artikeln mit erhöhter Oberflächenpolarität gemäß Anspruch 6 durch Umformen von Polyolefinen, Polyolefin-Blends und elastomermodifizierten Polyolefinen gemäß Anspruch 5.

8. Verfahren zur Herstellung von Polyolefin-Formkörpern mit erhöhter Oberflächenpolarität gemäß Anspruch 7, dadurch gekennzeichnet, daß man die Blockcopolymeren in die Polyolefine, Polyolefin-Blends und elastomermodifizierten Polyolefine vor der Formgebung in üblicher Weise einarbeitet und das erhaltene Compound im Spritzgießverfahren verarbeitet.

## Claims

1. Polyolefins, polyolefin blends and elastomer-modified polyolefins, characterized in that they include, as additives for increasing surface polarity, AB block copolymers of the general formula 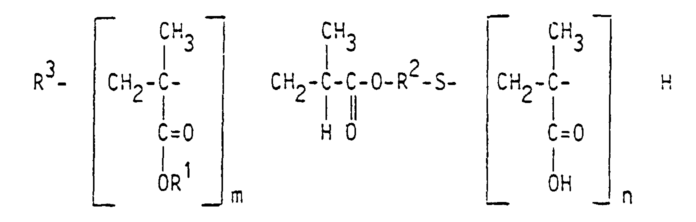 where the radicals
R¹ are identical or different and are alkyl radicals having from 1 to 8 carbon atoms, other than the tert-butyl radical,
R² are -(CH₂)ₚ- radicals, in which p is a number from 2 to 6,
R³ is the radical of a chain regulator known per se and containing no active hydrogen atoms and
n and m are identical or different, and each has a mean numerical value of ≥ 3.

2. Polyolefins, polyolefin blends and elastomer-modified polyolefins according to Claim 1, characterized in that
R¹ is an alkyl radical having from 1 to 8 carbon atoms,
R² is the -(CH₂)₂- radical,
R³ is the C₁₂H₂₅S radical and
n and m each have a numerical value of from 4 to 100.

3. Polyolefins, polyolefin blends and elastomer-modified polyolefins according to Claim 2, characterized in that R¹ is a methyl, ethyl, butyl or 2-ethylhexyl radical and m and n have mean numerical values of from 3 to 100.

4. Polyolefins, polyolefin blends and elastomer-modified polyolefins according to Claims 1 to 3, characterized in that the block copolymers are present in amounts of from 0.1 to 10 % by weight.

5. Polyolefins, polyolefin blends and elastomer-modified polyolefins which include block copolymers of the general average formula 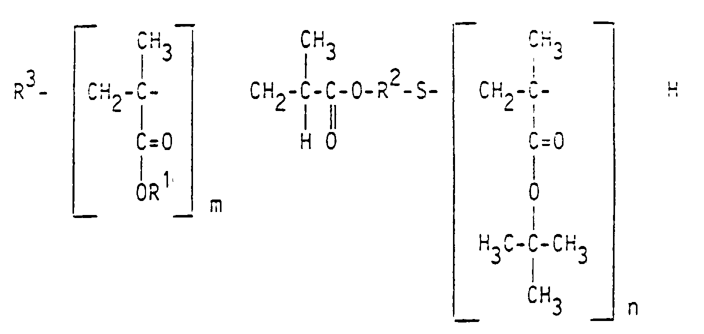 where the radicals and indices are as already defined in Claim 1.

6. Process for preparing polyolefins, polyolefin blends and elastomer-modified polyolefins according to Claims 1 to 4, characterized in that the polyolefins, polyolefin blends and elastomer-modified polyolefins according to Claim 5 are heated to temperatures above about 160°C.

7. Process for producing polyolefin articles with increased surface polarity according to Claim 6 by shaping polyolefins, polyolefin blends and elastomer-modified polyolefins according to Claim 5.

8. Process for producing moulded polyolefin articles with increased surface polarity according to Claim 7, characterized in that the block copolymers are incorporated in the usual manner into the polyolefins, polyolefin blends and elastomer-modified polyolefins, before moulding, and the resulting compound is injection moulded.

## Revendications

1. Polyoléfines, mélanges polyoléfiniques et polyoléfines modifiées par des élastomères, caractérisés en ce qu'ils contiennent comme additifs pour augmenter la polarité superficielle, des copolymères séquencés AB de formule générale : 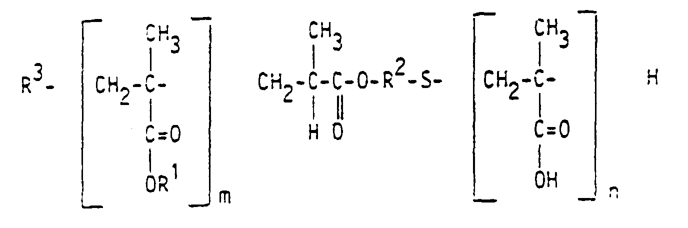 où les radicaux
R¹ sont identiques ou différents et représentent des radicaux alcoyle avec 1 à 8 atomes de carbone, à l'exclusion du radical t-butyle;
R² sont des radicaux -(CH₂)ₚ-, dans lesquels p représente un nombre de 2 à 6;
R³ représente le radical d'un régulateur de chaîne connu, lequel est exempt d'atomes d'hydrogène actifs, et
n et m sont identiques ou différents et possèdent chacun une valeur moyenne de ≥ 3.

2. Polyoléfines, mélanges polyoléfiniques et polyoléfines modifiées par des élastomères suivant la revendication 1, caractérisés en ce que :
R¹ est un radical alcoyle avec 1 à 8 atomes de carbone;
R² est le radical -(CH₂)₂-;
R³ est le radical C₁₂H₂₅S-, et
n et m possèdent chacun une valeur de 4 à 100.

3. Polyoléfines, mélanges polyoléfiniques et polyoléfines modifiées par des élastomères suivant la revendication 2, caractérisés en ce que R¹ est le radical méthyle, éthyle, butyle ou 2-éthylhexyle et n et m possèdent une valeur moyenne de 3 à 100.

4. Polyoléfines, mélanges polyoléfiniques et polyoléfines modifiées par des élastomères suivant les revendications 1 à 3, caractérisés en ce que les copolymères séquencés sont présents en des quantités de 0,1 à 10% en poids.

5. Polyoléfines, mélanges polyoléfiniques et polyoléfines modifiées par des élastomères, contenant des copolymères séquencés de formule générale moyenne : 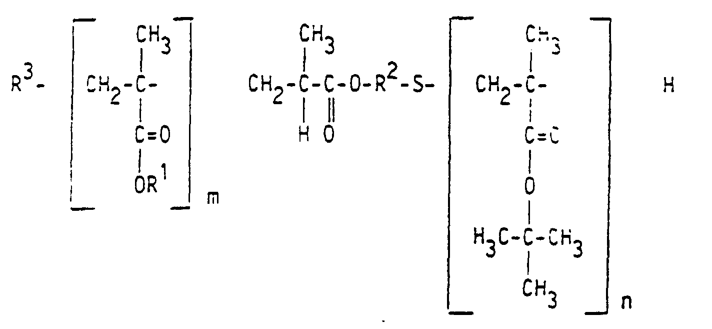 où les radicaux et indices ont les significations déjà citées à la revendication 1.

6. Procédé de préparation de polyoléfines, mélanges polyoléfiniques et polyoléfines modifiées par des élastomères suivant les revendications 1 à 4, caractérisé en ce que l'on chauffe les polyoléfines, mélange polyoléfiniques et polyoléfines modifiées par des élastomères suivant la revendication 5, à des températures supérieures à environ 160°C.

7. Procédé de préparation d'articles de polyoléfines avec une polarité superficielle élevée suivant la revendication 6, par mise en forme de polyoléfines, mélanges polyoléfiniques et polyoléfines modifiées par des élastomères suivant la revendication 5.

8. Procédé de préparation de pièces moulées en polyoléfine avec une polarité superficielle élevée suivant la revendication 7, caractérisé en ce que l'on introduit les copolymères séquences dans les polyoléfines, mélanges polyoléfiniques et polyoléfines modifiées par des élastomères, avant le moulage, de manière classique, et que le composé obtenu est traité par un procédé de moulage par injection.
